# EUROPÄISCHE PATENTANMELDUNG

(11) **EP 2 210 841 A2**
(43) Veröffentlichungstag der Anmeldung: **28.07.2010**
(21) Anmeldenummer: 09405167.9
(22) Anmeldetag: 25.09.2009
(51) Int. Cl.: B65H 33/18, B65H 31/34

(54) **Fördervorrichtung aufweisend Richtnocken**

(30) Priorität: 29.09.2008 CH 15372008
(71) Anmelder: Ferag AG, 8340 Hinwil (CH)
(72) Erfinder: Honegger, Werner, 8806 Bäch (CH); Schnieder, Marcel, 6330 Cham (CH)
(74) Vertreter: Müller, Markus Andreas

(57) **Zusammenfassung**

Eine Fördervorrichtung (1) zum Fördern und Ausrichten von flachen und optional flexiblen Produkten (1) oder von Stapeln von flachen Produkten (2), insbesondere Druckproduckten, weist vorlaufende Nocken (6) zum Anschlag an eine vorlaufende Kante (21) von geförderten Produkten (2), und nachlaufende Nocken oder Schiebenocken (9) zum Anschlag an eine nachlaufende Kante (22) der geförderten Produkte (2) auf. Die Produkte (2) sind zwischen die vorlaufenden und nachlaufenden Nocken (6, 9) einlegbar und so durch die Nocken (6, 9) ausgerichtet. Ein Abstand (A, B) zwischen aufeinander folgenden Schiebenocken (9) ist verstellbar, ohne dass Teile der Vorrichtung (1) ausgetauscht zu werden brauchen.

## Beschreibung

Die Erfindung bezieht sich auf das Gebiet der Fördertechnik und insbesondere auf eine Vorrichtung und ein Verfahren zum Fördern und Ausrichten von Gegenständen oder von Stapeln von flachen und optional auch flexiblen Gegenständen wie Druckprodukten gemäss dem Oberbegriff der entsprechenden unabhängigen Patentansprüche.

### STAND DER TECHNIK

Eine derartige Förder- und Ausrichtevorrichtung ist beispielsweise aus EP 1 410 992 A1 bekannt. Darin werden flache Produkte mittels einer Fördervorrichtung einer automatischen Verpackungsmaschine zugeführt, wobei ein Abstand zwischen den Produkten im Voraus gewählt und dann fest vorgegeben ist. Die flachen flexiblen Produkte respektive Teilprodukte sind vorzugsweise einzelne Druckprodukte, aber auch CDs, oder flache Mustergegenstände. Aus einzelnen Teilprodukten wird durch Aufeinanderlegen ein Stapel gebildet. Die Ausrichtung der nachlaufenden Kanten der Produkte eines Stapels geschieht durch jeweils ein mit der Fördervorrichtung mit bewegtes Schiebeelement ("pusher"), die Ausrichtung der vorlaufenden Kanten geschieht, indem an einer Stelle der Fördervorrichtung ein Anschlagelement kurzzeitig gegen die vorlaufende Kanten der in Förderrichtung bewegten Stapel gehalten wird. Anschliessend wird das Anschlagelement aus der Bewegungsrichtung der Stapel wegbewegt, und dann wieder gegen die Vorderkante des nächsten Stapels bewegt. Die Vorrichtung kann aber nicht verhindern, dass der Stapel nach dem Ausrichten wieder auseinanderrutscht, sei es, weil die gestapelten Produkte aneinander abrutschen, oder weil die Förderbewegung abgebremst wird.

Aus US 6,293,544 und US 4,502,592 ist bekannt, flache Gegenstände mittels parallel nebeneinander verlaufenden Förderbändern zu fördern, wobei eines der Förderbänder hervorstehende Finger oder Anschläge aufweist, welche gegen die Nachlaufkante drücken, und eines der anderen Förderbänder Finger, welche gegen die Vorlaufkante drücken. Der Abstand zwischen den Fingern ist durch den Geschwindigkeitsunterschied der Förderbänder einstellbar. So können Stapel, währenddem sie gefördert werden, zusammen geschoben werden. Der Abstand zwischen aufeinander folgenden Gegenständen ist jedoch nicht veränderbar.

US 2003/0136086 A1 beschreibt eine Verpackungsmaschine mit individuell angetriebenen Förderelementen: Mitnehmer können vorlaufende oder nachlaufende Mitnehmer sein, welche unabhängig voneinander mittels eines elektrischen Linearantriebs bewegbar sind, wozu Magnete an den Mitnehmern angebracht sind. In einer der Ausführungsformen ist der Abstand zwischen vor- und nachlaufenden Mitnehmern verstellbar, um einen dazwischen eingelegten Kartonrohling zu einer Schachtel auseinanderzufalten. Es können auch ein vorlaufender und ein nachlaufender Mitnehmer auf einem gemeinsamen Träger angeordnet sein.

DE 33 35 583 A1 zeigt eine Vorschubvorrichtung zum absatzweisen Verschieben von Bogenstapeln mittels Greifern. Jeweils ein vorderer Greifer und ein hinterer Greifer bilden ein Greiferpaar. Mindestens einer der beiden Greifer kann zur Anpassung an das Produkt verstellbar sein. Die beiden Greifer sind an einem hin- und her-bewegbaren Mitnehmer angeordnet.

US 5,072,573 zeigt eine Transportschale mit in Förderrichtung gegeneinander verschiebbaren Querwänden. Die Verschiebung ist durch eine Kulisse gesteuert.

### DARSTELLUNG DER ERFINDUNG

Es ist deshalb Aufgabe der Erfindung, eine Vorrichtung und ein Verfahren zum Ausrichten von Produkten oder von Stapeln von flachen und optional auch flexiblen Gegenständen wie Druckprodukten der eingangs genannten Art zu schaffen, welche die oben genannten Nachteile behebt.

Diese Aufgabe lösen eine Vorrichtung und in Verfahren zum Ausrichten von Produkten oder von Stapeln von flachen und optional auch flexiblen Gegenständen, insbesondere Druckprodukten mit den Merkmalen der entsprechenden unabhängigen Patentansprüche.

Die Fördervorrichtung zum Fördern und Ausrichten von Produkten oder von Stapeln von flachen Produkten weist vorlaufende Nocken zum Anschlag an eine vorlaufende Kante der Produkte auf, sowie nachlaufende Nocken oder Schiebenocken zum Anschlag an eine nachlaufende Kante der Produkte. Die Produkte sind zwischen die vorlaufenden und nachlaufenden Nocken einlegbar und dadurch ausgerichtet. Dabei ist ein Abstand zwischen aufeinander folgenden Schiebenocken verstellbar, ohne dass Teile der Vorrichtung ausgetauscht zu werden brauchen.

Der Abstand zwischen aufeinander folgenden Schiebenocken ist gleich dem Abstand zwischen den nachlaufenden Kanten der Produkte, und wird im Folgenden auch Taktabstand genannt. Es ist also möglich, den Taktabstand zu variieren. Damit kann der Taktabstand an die Länge der Produkte in Förderrichtung angepasst werden. Diese Produktlänge ist ungefähr gleich oder leicht kleiner als eine Fachlänge, definiert durch den Abstand zwischen einer vorlaufenden Nocke und der nachfolgenden Schiebenocke. Wäre der Taktabstand nicht verstellbar, so würde bei Produkten mit geringerer Länge der Abstand zwischen benachbarten Produkten, im Folgenden auch Produktabstand genannt, vergrössert. Für Bearbeitungsvorrichtungen wie z.B. Verpackungsmaschinen wie Foliermaschinen, die durch die Fördervorrichtung versorgt werden, ist jedoch erwünscht oder gefordert, dass der Produktabstand gleich ist, ungeachtet der Produktlänge. Indem der Taktabstand anpassbar ist, kann der Produktabstand auch bei unterschiedlichen Produktlängen konstant gehalten oder, allgemeiner gesprochen, unabhängig von der Produktlänge auf einen vorgegebenen Wert eingestellt werden.

Das Einstellen der Vorrichtung auf einen unterschiedlichen Taktabstand geschieht, ohne dass die Vorrichtung demontiert und Teile wie Förderketten mit unterschiedlichen Nockenabständen ausgetauscht werden müssen. Damit ist ein schnelles Umrüsten der Vorrichtung auf unterschiedliche Produktelängen möglich. Es muss jedoch nicht unbedingt möglich sein, den Taktabstand während des Betriebs der Vorrichtung anzupassen. Mit anderen Worten kann es erforderlich sein, die Vorrichtung anzuhalten, um den Taktabstand zu verändern.

Vorzugsweise sind jeweils eine Schiebenocke und eine darauf folgende vorlaufende Nocke fest miteinander verbunden. Dadurch bilden sie zusammen eine Einheit, Ausrichtelement genannt, und werden miteinander bewegt. Der Produktabstand zwischen aufeinander folgenden Produkten respektive Produktestapeln wird durch die Länge der Ausrichtelemente in Förderrichtung bestimmt. Der Taktabstand und die Fachlänge (entsprechend der Produktlänge) sind durch den Abstand der Ausrichtelemente voneinander bestimmt. Vorzugsweise sind die Ausrichtelemente einstückig, wobei also ihre vorlaufende Fläche wie eine Schiebenocke wirkt, und die nachlaufende Fläche als vorlaufende Nocke.

In einer anderen bevorzugten Ausführungsform der Erfindung ist der Produktabstand verstellbar. Diese Verstellbarkeit kann beispielsweise realisiert werden, indem die Ausrichtelemente jeweils einzeln gefördert sind, und dabei in sich gegeneinander verschiebbare vorlaufende und nachlaufende Nocken aufweisen. Deren Abstand wird beispielsweise durch eine Kulissensteuerung gesteuert. Alternativ können die vorlaufenden und nachlaufenden Nocken jeweils unabhängig durch eigene, separate Fördermittel transportiert sein, wie sie im Folgenden für die Ausrichtelemente beschrieben sind. Dabei ist also nebst dem Abstand zwischen den einzelnen Nocken eines Fördermittels auch der Versatz zwischen den Nocken der separaten Fördermittel vorgebbar und einstellbar.

In einer bevorzugten Ausführungsform der Erfindung sind die Schiebenocken zur Erzielung eines verstellbaren Abstandes in gleichmässigen Abständen an einem umlaufenden Fördermittel angebracht, und ist der Abstand durch Verstellen der Länge des Fördermittels einstellbar. Dabei ist das Fördermittel derart gestaltet, dass eine Längenänderung des gesamten Fördermittels sich gleichmässig und proportional über die Länge verteilt. Der Abstand zwischen jeweils aufeinander folgenden Nocken verlängert sich also bei allen Nocken um den gleichen Anteil.

Wenn nur Ausrichtelemente vorliegen, also kombinierte vorlaufende Nocken und Schiebenocken, so sind diese mittels eines einzigen Fördermittels förderbar. In der Praxis werden in der Regel zwei oder mehr parallel, seitlich voneinander verlaufende Fördermittel mit parallel und synchron zueinander bewegten Nocken vorliegen. Wenn die vorlaufenden Nocken und die Schiebenocken voneinander getrennt, als separate Teile vorliegen, können sie auch auf separaten Fördermitteln gefördert werden. Sie werden dann zueinander phasenverschoben gefördert. Beim Verstellen der Länge der Fördermittel geschieht dies synchron für beide Fördermittel. Auch hier werden in der Praxis zumindest für die Schiebenocken und vorzugsweise auch für die vorlaufenden Nocken jeweils zwei oder mehr parallel und synchron verlaufende Nockensätze vorliegen.

In einer ersten bevorzugten Variante dieser Ausführungsform ist das umlaufende Fördermittel flexibel und elastisch und ist der Abstand durch Dehnen des Fördermittels einstellbar. Das Fördermittel kann ein Seil oder ein Band, oder eine Gruppe von Seilen oder Bändern sein und beispielsweise aus einem elastischen Kunststoff oder aus Metallfedern gebildet sein, welche die aufeinander folgenden Nocken miteinander verbinden. Das Fördermittel läuft beispielsweise um zwei Umlenkrollen um, wobei die Längenverstellung durch Verstellen des Abstandes zwischen den Umlenkrollen geschieht, vorzugsweise durch Verschieben einer Lagerachse einer der Umlenkrollen.

In einer zweiten bevorzugten Variante dieser Ausführungsform ist das umlaufende Fördermittel eine Pufferkette, d.h. eine Kette mit verstellbarem Abstand zwischen den Kettengliedern, und ist der Abstand durch Steuerkulissen des Fördermittels einstellbar. Solche Pufferketten oder Fördervorrichtungen mit kontrollierbarem Abstand zwischen einzelnen Förderelementen sind beispielsweise in den veröffentlichten Patentschriften EP 0 300 170 und EP 0 309 702 beschrieben.

Vorzugsweise geschieht auch hier das Verstellen der Länge des Fördermittels durch Verändern der Länge einer linearen Förderstrecke, um welche das Fördermittel umläuft, also einer Förderstrecke, die mit einem Obertrum (oder Arbeitstrum) und einem Rücktrum linear zwischen zwei Umlenkelementen verläuft. Alternativ können bei beiden Varianten die Umlenkelemente am Ende der Förderstrecke unbeweglich sein, und das Fördermittel im Rücktrum mit den Nocken um eine oder mehrere weitere Umlenkrollen oder Spannrollen geführt sein, deren Achsposition zum Verstellen der Länge des Fördermittels verschiebbar ist.

In einer anderen bevorzugten Ausführungsform der Erfindung sind die Nocken (entweder die Ausrichtelemente, oder jeweils separat die Schiebenocken und die vorlaufenden Nocken) zum wahlweisen Ankoppeln an oder Abkoppeln von einem umlaufenden Fördermittel ausgebildet, entsprechend dem gewünschten Abstand zwischen den Nocken. In einer Speicherstellung sind sie vom Fördermittel abgekoppelt sind, und durch eine Freigabevorrichtung sind sie in wählbaren Abständen an das Fördermittel ankoppelbar. Falls die Nocken Ausrichtelemente sind, ist dieser Abstand gleich dem Taktabstand. Falls die Nocken separate Schiebenocken und vorlaufende Nocken sind, die am gleichen Fördermittel transportiert werden, ist dieser Abstand abwechslungsweise der Produktabstand und die Produktlänge. Es ist jedoch auch möglich, dass Schiebenocken und vorlaufende Nocken seitlich versetzt auf separaten Fördermitteln gefördert werden. Die Abstände sind dann bei jedem Fördermittel jeweils gleich dem Taktabstand, jedoch sind die Schiebenocken gegenüber den vorlaufenden Nocken um die Produktlänge respektive Fachlänge phasenverschoben. Beispiele für Fördervorrichtungen mit einzeln abrufbaren Mitnehmern sind in der EP 0 276 409 beschrieben.

Das Verfahren zum Fördern und Ausrichten von Produkten oder von Stapeln von flachen Produkten weist die Schritte auf:
- Schieben der Produkte an ihren nachlaufenden Kanten mittels nachlaufender Nocken oder Schiebenocken;
- Zurückhalten der Produkte an ihren vorlaufenden Kanten mittels vorlaufender Nocken;
- Ausrichten der Produkte durch die Schiebenocken und die vorlaufenden Nocken;
- Einstellen eines Abstandes aufeinander folgender Produkte durch den Abstand zwischen jeweils einer Schiebenocke und der darauf folgenden, das nächste Produkt zurückhaltende vorlaufenden Nocke, wobei die Schiebenocke und die darauf folgende vorlaufende Nocke fest miteinander verbunden sind und so miteinander ein sowohl an seiner vorlaufenden wie auch an seiner nachlaufenden Seite wirkendes Ausrichtelement bilden.

In den beschriebenen Ausführungsformen der Erfindung versteht sich, dass das Fördern der Produkte jeweils durch Bewegung der Produkte in eine gleich bleibende Förderrichtung geschieht, also nicht durch hin- und herbewegen der Produkte. Vorzugsweise ist zudem die Bewegung der Nocken im wesentlichen kontinuierlich, also von mindestens annähernd konstanter Geschwindigkeit, und nicht schrittweise. Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Fördervorrichtung gemäss der Erfindung;
- Figur 2: verschiedene Einstellungen eines Taktabstandes;
- Figur 3: eine Prinzipskizze einer Ausführungsform der Erfindung mit einem elastischen Zugelement;
- Figur 4: eine Prinzipskizze einer Ausführungsform der Erfindung mit einem längenverstellbaren Zugelement;
- Figur 5: eine Prinzipskizze einer Ausführungsform der Erfindung mit frei vorgebbaren Nockenabständen;
- Figur 6: eine Variante der Ausführungsform der Figuren 3 oder 4;
- Figur 7: verschiedene Nockenformen; und
- Figur 8: eine Aufsicht auf eine Fördervorrichtung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

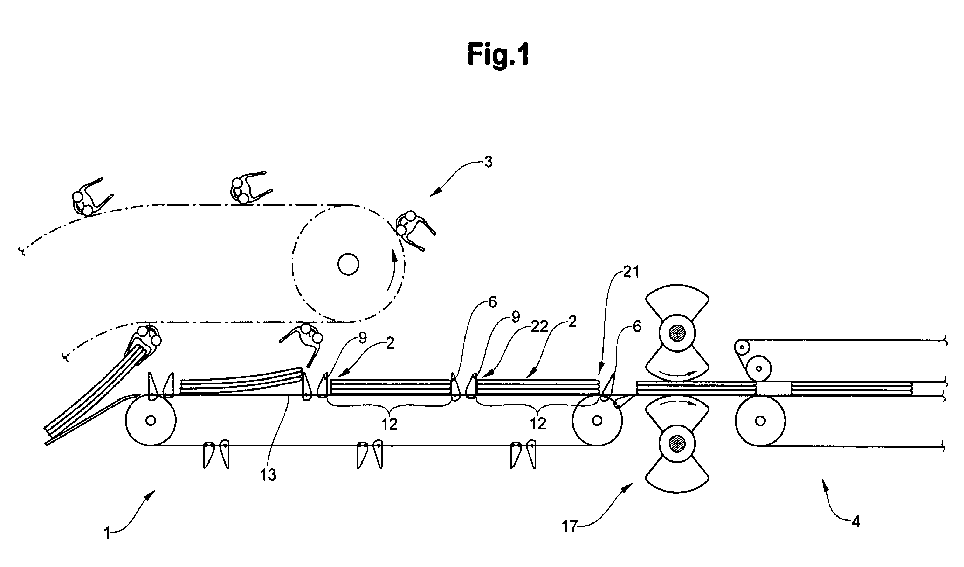

**Figur 1** zeigt schematisch eine Fördervorrichtung gemäss der Erfindung. Die Fördervorrichtung 1 ist zur Übergabe von Produkten 2 von einer Zuführvorrichtung 3 an eine Bearbeitungsvorrichtung 4 eingerichtet. Die Bearbeitungsvorrichtung 4 ist beispielsweise eine Verpackungseinrichtung wie eine Foliermaschine. Vor der Bearbeitungsvorrichtung 4 kann eine Beschleunigungs- oder Verzögerungseinrichtung 17 im Produktestrom angeordnet sein.

Die Zuführvorrichtung 3 legt die Produkte 2 einzeln oder als Stapel oder Teilstapel auf Auflagemittel 13 oder Produktträger, beispielsweise Bleche, ab. Zwischen und parallel zu diesen Auflagemitteln 13 verlaufen, an vorzugsweise eigenen Fördermitteln, Nocken 6, 9, welche zwischen den Nocken liegende Zwischenräume oder Fächer 12 zur Ablage der Produkte 2 bilden. Hier und im Folgenden sind in den Fächern 12 einzelne Produkte oder Stapel von Produkten abgelegt. Die Stapel können durch die Zuführvorrichtung 3 als Ganzes in die Fächer 12 abgelegt werden, oder durch eine Folge von mehreren Zuführvorrichtungen 3 (nicht gezeichnet) durch Aufeinanderlegen mehrerer Produkte in dasselbe Fach 12 sukzessive gebildet werden.

Die Nocken sind einerseits Schiebenocken 9, welche die Produkte 2 an nachlaufenden Produktekanten 22 in Förderrichtung schieben, und andererseits vorlaufende Nocken 6, welche die Bewegung der Produkte 2 an vorlaufenden Produktekanten 21 in Förderrichtung begrenzen. Die Länge der Produkte 2 in Förderrichtung entspricht der Länge der Fächer 12, also dem Abstand zwischen jeweils aufeinander folgenden vorlaufenden Nocken 6 und Schiebenocken 9. Die Länge der Fächer ist vorzugsweise gleich oder etwas länger als die Produktlänge. Wenn Produkte 2 unterschiedlicher Länge gestapelt sind oder gestapelt werden, ist die Länge des längsten Produktes 2 massgebend.

Die Nocken können, relativ zum jeweiligen Fördermittel, fest angeordnet sein, oder derart, dass sie, beispielsweise durch eine Kulisse gesteuert, an bestimmten Stellen ihrer Bahn auftauchen oder abtauchen.

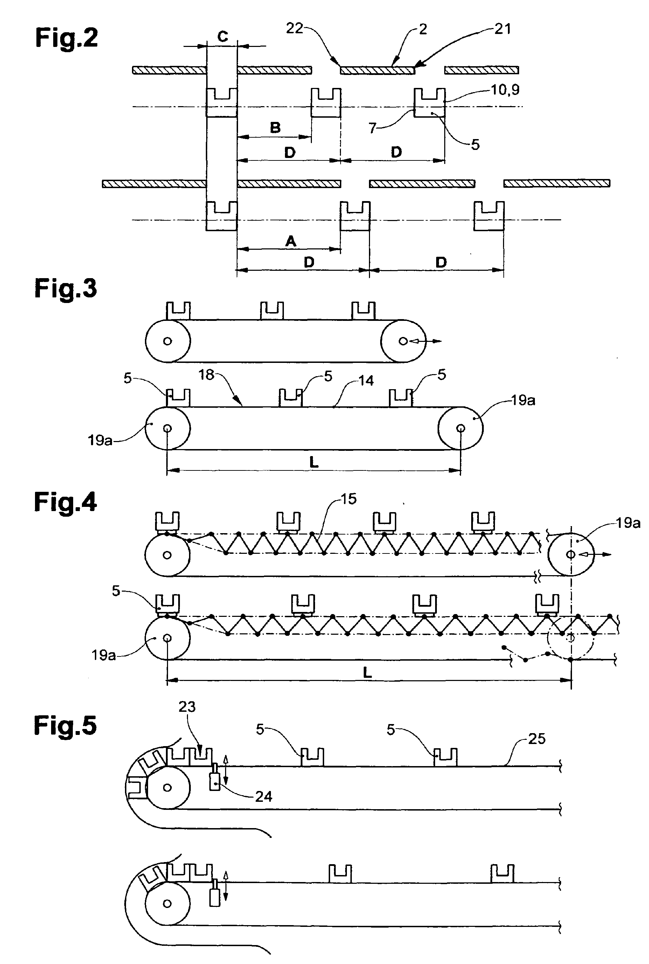

**Figur 2** zeigt schematisch verschiedene Einstellungen eines Taktabstandes D zwischen aufeinander folgenden Schiebenocken 9 und damit auch zwischen aufeinander folgenden nachlaufenden Produktekanten 22. Der Taktabstand D ist an unterschiedliche Produktlänge respektive Fachlänge A, B anpassbar. Ein Abstand oder Zwischenraum zwischen Produkten 2, genauer gesagt, zwischen der nachlaufenden Produktekante 22 eines ersten Produktes 2 und der vorlaufenden Produktekante 21 eines nachfolgenden zweiten Produktes 2, wird im Folgenden als Produktabstand C bezeichnet. Dieser Produktabstand C kann durch den anschliessenden Bearbeitungsprozess vorgegeben sein. Insbesondere kann wünschbar sein, dass der Produkteabstand C nicht von der Produktlänge A, B abhängig ist. Ansonsten würden kurze Produkte zu längeren Produktabständen führen. Durch Anpassen des Taktabstands D an die Produktlänge A, B ist also ein gleichbleibender Produktabstand C erzielbar.

**Figur 3** zeigt eine Prinzipskizze einer Ausführungsform der Erfindung mit einem längenverstellbaren und dabei elastischen Zugelement 14 in zwei Stellungen. Das Zugelement ist dabei vorzugsweise ein elastisches Seil oder Band 14, beispielsweise aus Gummi oder Kunststoff. Es umfährt mindestens zwei Umlenkrollen 19a, welche den Übergang von der Förderstrecke 18 am Arbeitstrum zum Rücktrum bilden und eine Länge L der Förderstrecke 18 bestimmen. Zwischen den Umlenkrollen 19a verläuft das Seil oder Band 14 im wesentlichen linear, wobei es auch durch (nicht eingezeichnete) Stützrollen oder Stützschienen abgestützt sein kann. Mindestens eine der Umlenkrollen 19a ist entlang dieser linearen Richtung verschiebbar, so dass der Abstand zwischen den Umlenkrollen 19a sich einstellen lässt. Durch die Elastizität des Seiles oder Bandes 14 verteilt sich die Längenänderung gleichmässig auf den Umfang der Fördervorrichtung 1, und somit auch auf die Abstände zwischen am Seil oder Band 14 befestigten Ausrichtelementen 5. Damit ist auch die Fachlänge A, B auf einfache Weise einstellbar. Vorzugsweise ist diejenige Umlenkrolle 19a, die sich an der Seite zur Übergabe der Produkte 2 an die Bearbeitungsvorrichtung 4 befindet, ortsfest angeordnet, und ist die gegenüberliegende Umlenkrolle 19a mit ihrer Achse in Längsrichtung der Förderstrecke 18 bewegbar.

**Figur 4** zeigt eine Prinzipskizze einer Ausführungsform der Erfindung mit einem längenverstellbaren Förderelement 15 in zwei Stellungen. Das Förderelement 15 fördert die Ausrichtelemente 5 und ist als Pufferketten-Konstruktion, d.h. mit verstellbarem Abstand zwischen den Kettengliedern ausgebildet. Hier wird die Längenänderung des Zugelementes und die Verteilung der Längenänderung auf die Fachlänge A, B vorzugsweise mittels einer Kulissensteuerung (nicht gezeichnet) bewirkt.

**Figur 5** zeigt eine Prinzipskizze einer Ausführungsform der Erfindung mit frei vorgebbaren Nockenabständen, im Betrieb mit einem ersten und einem zweiten Produktabstand: Die Ausrichtelemente 5 sind wahlweise durch einen Klemm-Mechanismus oder Arretiermechanismus an ein Fördermittel, insbesondere ein flexibles aber nicht wesentlich elastisches Fördermittel wie z.B. ein Zugseil 25 ankoppelbar Das Ankoppeln wird mittels einer Freigabevorrichtung 24 gesteuert. Vor der Freigabevorrichtung 24 werden zurückkehrende Ausrichtelemente 5 in einer Speicherstellung 23 zurückgehalten, und gesteuert freigegeben, so dass die gewünschte Fachlänge A, B entsteht. Ein Erkennen der Fachlänge und Freigeben der Ausrichtelemente 5 kann durch mechanische, elektrische, pneumatische oder durch eine Kombination solcher Elemente erfolgen.

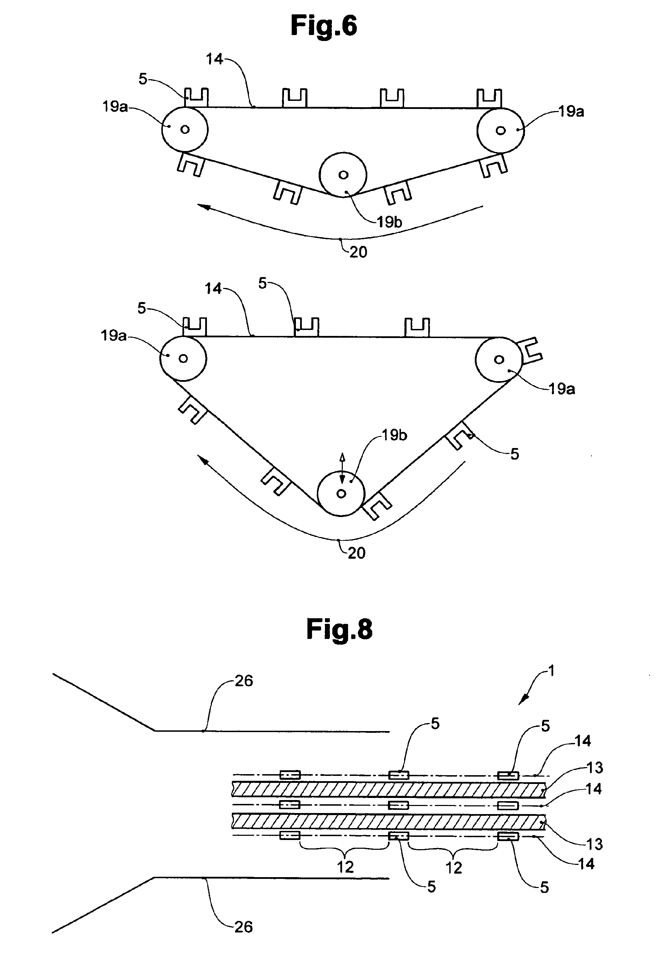

**Figur 6** zeigt schematisch eine Variante der Ausführungsformen der Figuren 3 oder 4 in zwei Stellungen. Hier sind die beiden Umlenkrollen 19a ortsfest und wird die Längenverstellung durch Verstellen mindestens einer weiteren Rolle oder Spannrolle 19b erreicht, über welche der Rücktrum 20 führt. Im gezeigten Beispiel wird dabei die Achse der Spannrolle 19b senkrecht zur Verbindungslinie zwischen den Umlenkrollen 19a verschoben. Eine analoge Wirkung kann auch mit mehr als einer Spannrolle 19b erzielt werden. Dieses Spannprinzip kann auch auf die Ausführungsform der Figur 4 angewendet werden.

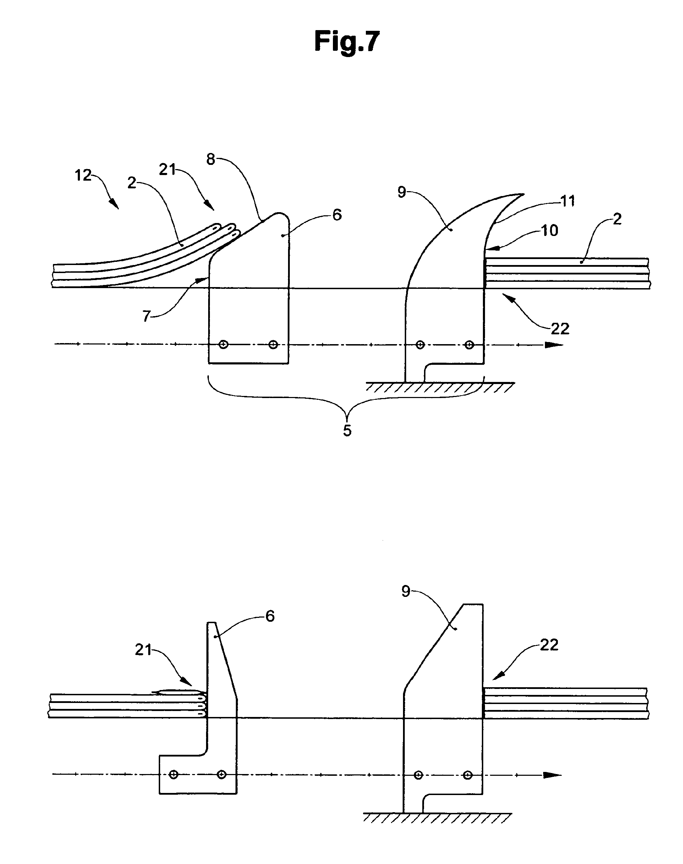

**Figur 7** zeigt verschiedene Nockenformen. Im oberen Beispiel ist eine vorlaufende Nocke 6 an der hintern Seite oder nachlaufenden Fläche 7 abgeschrägt, respektive mit einer schrägen Fläche 8 versehen. Dadurch rutschen aufliegende Produkte 2 mit ihrer vorlaufende Produktekante 21 besser in das Fach 12 zwischen die Nocken 6, 9 hinein, insbesondere wenn sie durch die Fördervorrichtung beschleunigt werden. Eine Schiebenocke 9 weist an der vorderen oder vorlaufenden Fläche 10 eine in Förderrichtung vorwärts geneigte Ausrichtfläche 11 auf. Durch die vorne geneigte Fläche 11 werden die Produkte 2 mit ihren nachlaufende Produktekanten 22 besser zusammengehalten. Im unteren Beispiel sind die vorlaufenden und nachlaufenden Flächen senkrecht zur Förderrichtung. Die Schiebenocke 9 ist grösser als die vorlaufende Nocke 6 ausgebildet, um grössere Kräfte aufnehmen zu können.

**Figur 8** zeigt schematisch eine Aufsicht auf eine Fördervorrichtung 1 mit parallel zueinander verlaufenden Zugelementen 14 und daran angebrachten Ausrichtelementen 5, sowie optionalen Auflagemitteln 13 zur Aufnahme und Stützung der Produkte. An beiden Seiten der Zugelemente und Auflagemittel sind Richtbleche oder Richtbänder 26 zum seitlichen Ausrichten der Produkte 2 angeordnet.

### BEZUGSZEICHENLISTE

- 1: Fördervorrichtung
- 2: Produkt
- 3: Zuführvorrichtung
- 4: Bearbeitungsvorrichtung
- 5: Richtnocke, Ausrichtelement
- 6: vorlaufender Anschlag
- 7: nachlaufende Fläche
- 8: schräge Fläche
- 9: nachlaufender Anschlag, Schiebenocken
- 10: vorlaufende Fläche
- 11: vorwärts geneigte Ausrichtfläche
- 12: Fach
- 13: Auflagemittel
- 14: elastisches Seil
- 15: Förderelement
- 17: Beschleunigungs- oder Verzögerungseinrichtung
- 18: Förderstrecke
- 19a: Umlenkrollen
- 19b: Spannrollen
- 20: Rückweg, Rücktrum
- 21: vorlaufende Produktekante
- 22: nachlaufende Produktekante
- 23: Speicherstellung
- 24: Freigabevorrichtung
- 25: Zugseil (nicht elastisch)
- 26: Richtbleche
- A, B: Abstand zwischen Schiebenocken, Fachlänge
- C: Produkteabstand
- D: Taktabstand
- L: Länge der Förderstrecke

## Patentansprüche

1. Fördervorrichtung (1) zum Fördern und Ausrichten von flachen und optional flexiblen Produkten (1) oder von Stapeln von flachen Produkten (2), aufweisend vorlaufende Nocken (6) zum Anschlag an eine vorlaufende Kante (21) von geförderten Produkten (2), und nachlaufende Nocken oder Schiebenocken (9) zum Anschlag an eine nachlaufende Kante (22) der geförderten Produkte (2), wobei die Produkte (2) zwischen die vorlaufenden und nachlaufenden Nocken (6, 9) einlegbar sind und so durch die Nocken (6, 9) gefördert und ausgerichtet sind,
**dadurch gekennzeichnet, dass** ein Abstand (D) zwischen aufeinander folgenden Schiebenocken (9) verstellbar ist, ohne dass Teile der Vorrichtung (1) ausgetauscht zu werden brauchen.

2. Fördervorrichtung (1) gemäss Anspruch 1, **dadurch gekennzeichnet, dass** jeweils eine Schiebenocke (9) und eine darauf folgende vorlaufende Nocke (6) fest miteinander verbunden sind, **dadurch** zusammen ein Ausrichtelement (5) bilden, und miteinander bewegt werden, und einen Abstand zwischen aufeinander folgenden Produkten (2) respektive Produktestapeln definieren.

3. Fördervorrichtung (1) gemäss Anspruch 2, wobei ein Ausrichtelement (5) einen einstückigen Richtkörper aufweist, dessen vorlaufende Fläche (10) als Schiebenocke (9) wirkt, und dessen nachlaufende Fläche (7) als vorlaufende Nocke (6) wirkt.

4. Fördervorrichtung (1) gemäss einem der vorherigen Ansprüche, wobei die vorlaufende Fläche (10) einer Schiebenocke (9) respektive eines Richtkörpers in Förderrichtung vorwärts geneigt ist.

5. Fördervorrichtung (1) gemäss einem der vorherigen Ansprüche, wobei die nachlaufende Fläche (7) einer Schiebenocke (6) respektive eines Richtkörpers in Förderrichtung abgeschrägt ist.

6. Fördervorrichtung (1) gemäss einem der vorherigen Ansprüche, wobei die Schiebenocken (9) zur Erzielung eines verstellbaren Abstandes (D) in gleichmässigen Abständen an einem umlaufenden Fördermittel (14) angebracht sind, und der Abstand durch Verstellen der Länge des Fördermittels (14) einstellbar ist.

7. Fördervorrichtung (1) gemäss Anspruch 6, wobei das umlaufende Fördermittel (14) flexibel und elastisch ist, und der Abstand (D) durch Dehnen des Fördermittels (14) einstellbar ist.

8. Fördervorrichtung (1) gemäss Anspruch 6, wobei das umlaufende Fördermittel eine Kette mit verstellbarem Abstand zwischen den Kettengliedern ist und der Abstand (D) durch Kulissen des Fördermittels einstellbar ist.

9. Fördervorrichtung (1) gemäss einem der Ansprüche 6 bis 8, wobei das Verstellen der Länge des Fördermittels (14, 15) durch Verändern der Länge (L) einer linearen Förderstrecke (18), um welche das Fördermittel (14) umläuft, geschieht.

10. Fördervorrichtung (1) gemäss einem der Ansprüche 6 bis 8, wobei das Verstellen der Länge des Fördermittels (14, 15) durch Verstellen der Position von Spannrollen (19), um welche das Fördermittel auf dem Rückweg (20) einer linearen Förderstrecke (18) umläuft, geschieht.

11. Fördervorrichtung (1) gemäss einem der Ansprüche 1 bis 5, wobei die Nocken (5, 6, 9) zum wahlweisen Ankoppeln an oder Abkoppeln von einem umlaufenden Fördermittel (25) ausgebildet sind, in einer Speicherstellung (23) vom Fördermittel (25) abgekoppelt sind und durch eine Freigabevorrichtung (24) in wählbaren Abständen an das Fördermittel (25) ankoppelbar sind.

12. Verfahren zum Fördern und Ausrichten von flachen und optional flexiblen Produkten (2) oder von Stapeln von flachen Produkten (2) durch
• Schieben der Produkte (2) an ihren nachlaufenden Kanten (22) mittels nachlaufender Nocken oder Schiebenocken (9);
• Zurückhalten der Produkte an ihren vorlaufenden Kanten (23) mittels vorlaufender Nocken (6);
• Fördern und Ausrichten der Produkte durch die Schiebenocken (9) und die vorlaufenden Nocken (6);
• Einstellen eines Abstandes (D) aufeinanderfolgender Produkte (2) durch den Abstand zwischen jeweils einer Schiebenocke (9) und der darauf folgenden, das nächste Produkt zurückhaltenden vorlaufenden Nocke (6), wobei die Schiebenocke (9) und die darauf folgende vorlaufende Nocke (6) mit festem Abstand miteinander verbunden sind und so miteinander ein sowohl an seiner vorlaufenden Seite (10) wie auch an seiner nachlaufenden Seite (7) wirkendes Ausrichtelement (5) bilden.

13. Verfahren gemäss Anspruch 12, aufweisend den Schritt des Verstellens eines Abstandes zwischen aufeinander folgenden Ausrichtelementen (5) nach Massgabe einer Länge der Produkte respektive Stapel in Förderrichtung.

14. Verfahren gemäss Anspruch 13, aufweisend den Schritt des Verstellens des Abstandes (D) durch Längenänderung eines Fördermittels (14, 15), an welchem die Ausrichtelemente (5) in gleichmässigen Abständen befestigt sind.

15. Verfahren gemäss Anspruch 13, aufweisend den Schritt des Verstellens des Abstandes (D) durch gesteuertes Ankoppeln der Ausrichtelemente (5) an ein umlaufendes Fördermittel (25) nach Massgabe des gewünschten Abstandes.
